# EUROPÄISCHE PATENTANMELDUNG

(11) **EP 1 267 051 A2**
(43) Veröffentlichungstag der Anmeldung: **18.12.2002**
(21) Anmeldenummer: 02100665.5
(22) Anmeldetag: 04.06.2002
(51) Int. Cl.: F02B 27/00

(54) **Vorrichtung zur Aufladung einer Brennkraftmaschine**

(30) Priorität: 13.06.2001 DE 10128721
(71) Anmelder: SIEMENS AKTIENGESELLSCHAFT, 80333 München (DE)
(72) Erfinder: Schnabel, Werner, 93055, Regensburg (DE)

(57) **Zusammenfassung**

Vorrichtung zur Aufladung einer Brennkraftmaschine, mit zwei Rohren (10, 14) und einer Lautsprechervorrichtung, die eine Signalgebereinrichtung (26) und eine schwingungsfähige Membran (22) besitzt, welche durch Signale der Signalgebervorrichtung zu Schwingungen angeregt wird. Von der Membran erzeugte Schallwellen breiten sich entlang dem zweiten Rohr in beiden Richtungen zu den Enden hin aus und treffen in das erste Rohr ein.

## Beschreibung

Die Erfindung betrifft eine Vorrichtung zur Aufladung einer Brennkraftmaschine.

Die Leistung einer Brennkraftmaschine ist proportional zum Luftdurchlass, der wiederum proportional zur Luftdichte ist. Die Leistung kann also bezüglich eines Hubvolumens und einer vorgegebenen Drehzahl durch Vorverdichten der Luft vor Eintreten in einen Zylinder erhöht werden. Dieser Vorgang wird als Aufladen bezeichnet. Es ist bekannt, eine dynamische Aufladung vorzunehmen, bei der unter Ausnutzung der Dynamik der angesaugten Luft die Aufladung erfolgt. In den Rohren eines Ansaugsystems sind Luftschwingungen vorhanden, die von der ungestörten Rohrlänge und deren Anregung durch die Brennkraftmaschine abhängen. Ist diese Rohrschwingung in einem Punkt besonders stark und erfolgt die Rohrschwingung in Phase mit der angesaugten Luft, so wird mehr Luft durch das Rohr gefördert und es erfolgt eine Aufladung.

Beispielsweise sind Schaltansaugsysteme bekannt, bei denen der insbesondere im unteren Drehzahlbereich erzielbare Luftaufwand erhöht wird. Zur Anpassung an unterschiedliche Zustände der Brennkraftmaschine wird beispielsweise eine Saugrohrlänge angepasst, damit drehzahlabhängig ein oder mehrere Resonatoren für die Aufladung bereitstehen.

Der vorliegenden Erfindung liegt die Aufgabe zugrunde, eine Vorrichtung zur Aufladung einer Brennkraftmaschine bereitzustellen, die die Aufladung mit den bekannten Aufladegeräten verbessert.

Die erfindungsgemäße Aufgabe wird durch eine Vorrichtung mit den Merkmalen aus Anspruch 1 gelöst.

Die erfindungsgemäße Vorrichtung besitzt ein erstes Rohr zur Versorgung der Brennkraftmaschine mit Luft. In der Luft breiten sich von der Brennkraftmaschine kommend sogenannte Pulsationswellen aus. In Richtung auf die Brennkraftmaschine zu strömt die angesaugte Luft, die durch die Pulsationswellen angeregt wird.

Bei der erfindungsgemäßen Vorrichtung ist ein zweites Rohr vorgesehen, das mit seinen Enden in unterschiedliche Bereiche des ersten Rohres mündet. Das zweite Rohr ist also parallel zu einem bestimmten Abschnitt des ersten Rohres angeordnet. Erfindungsgemäß ist eine Lautsprechervorrichtung vorgesehen, die eine Signalgebereinrichtung und eine schwingungsfähige Membran besitzt. Wobei die Membran mit Mitteln versehen ist, um auf Signale der Signalgebereinrichtung die Membran zu Schwingungen anzuregen. Die schwingende Membran erzeugt Druckwellen in der sie umgebenden Luft, die Druckwellen werden nachfolgend als Schallwellen bezeichnet. Die Membran ist in dem zweiten Rohr im wesentlichen senkrecht zur Rohrlängsrichtung angeordnet. Die von der Membran erzeugten Schallwellen breiten sich entlang dem zweiten Rohr in beiden Richtung zu den Enden hin aus und treten in das erste Rohr ein. Die Membran ist also derart in dem zweiten Rohr angeordnet, dass bei einer Auslenkung in Richtung der ersten Mündung ein Wellenberg einer Druckwelle erzeugt wird, während in Richtung der zweiten Mündung gleichzeitig ein Wellental einer Druckwelle erzeugt wird. Die sich in dem zweiten Rohr ausbreitenden Schallwellen besitzen also eine Phasenverschiebung von 180°, wenn sie sich in entgegengesetzte Richtungen ausbreiten. Die so in das erste Rohr eintretenden Schallwellen überlagern sich mit den in dem ersten Rohr laufenden Pulsationswellen, so dass sich insgesamt in dem ersten Rohr eine überlagerte Welle ausbreitet. Im Bereich der zweiten Mündung tritt die um 180° phasenversetzte Welle in das erste Rohr ein, so dass bevorzugt die zuvor hinzugefügte Schallwelle an der zweiten Mündung wieder ausgelöscht wird. Durch die erfindungsgemäße Vorrichtung wird also erreicht, dass sich in einem Bereich des ersten Rohres eine überlagerte Pulsationswelle ausbreitet. Die überlagerte Pulsationswelle in dem ersten Rohr erzeugt eine größere Amplitude und ändert je nach Ansteuerung auch die Frequenz, so dass eine verstärkte Aufladung erfolgt. Bevorzugt wird die überlagerte Pulsationswelle anschließend wieder zu der ursprünglichen Pulsationswelle reduziert. Hierdurch besteht die Möglichkeit, ohne zusätzliche Geräusche die Pulsationswellen für eine verbesserte Aufladung zu verstärken.

Bevorzugt weist die Signalgebereinrichtung eine Schwingungsfrequenz der Membran abhängig von der Drehzahl und der Geometrie der Brennkraftmaschine auf.

In einer zusätzlichen Variante ist ein Mikrofon stromabwärts von der Lautsprechereinrichtung vorgesehen, das Pulsationswellen fühlt und seine Messwerte an die Signalgebereinrichtung weiterleitet. Die Strömungsrichtung bezieht sich auf die angesaugte Luft. Auf diese Weise können Schallwellen durch die Membran in dem zweiten Rohr abhängig von den durchlaufenden Pulsationswellen erzeugt werden.

Bevorzugt ist in dem ersten Rohr ein Luftfilter oder eine Rohrerweiterung zwischen der ersten und der zweiten Mündung des zweiten Rohres angeordnet. Durch die Membran wird also eine Pulsationswelle zwischen Luftfilter und Brennkraftmaschine verstärkt und die hinzugefügte Verstärkung hinter dem Luftfilter wieder entfernt.

Die Membran ist zwischen der ersten und der zweiten Mündung bevorzugt derart angeordnet, dass einer durch das erste Rohr laufenden Pulsationswelle an der ersten Mündung eine von der Membran erzeugten Schallwelle hinzugefügt und an der zweiten Mündung der hinzugefügte Anteil im wesentlichen durch die um 180° phasenversetzte Schallwelle der Membran wieder ausgelöscht wird.

In einer möglichen Ausgestaltung der erfindungsgemäßen Vorrichtung ist zusätzlich stromaufwärts von der zweiten Mündung ein zweiter Lautsprecher für eine an sich bekannte aktive Geräuschunterdrückungseinheit oder eine Einrichtung zum Hinzufügen von Sound vorgesehen. Der zweite Lautsprecher wird bevorzugt von der Signalgebereinrichtung angesteuert, um entweder Geräusche der Brennkraftmaschine auszulöschen oder einen sogenannten Sound der Brennkraftmaschine hinzuzufügen.

Auch ist es möglich, dass zwischen der Membran und der aktiven Geräuschunterdrückungseinheit eine verstellbare Klappe vorgesehen ist. Die Klappe kann dazu dienen, ganz oder teilweise die um 180° phasenversetzte Schallwelle zu unterdrücken. Hierdurch findet nur eine teilweise oder überhaupt keine Auslöschung der hinzugefügten Welle in dem ersten Rohr statt.

In einer bevorzugten Ausgestaltung ist die Membran als eine Flachmembran ausgebildet, die bevorzugt im wesentlichen luftundurchlässig ist. Zweckmäßigerweise ist die Membran mit ihrem Rand an der Innenwandung des zweiten Rohres befestigt.

Vorzugsweise ist die Membran in einem Bereich des Rohres mit einem vergrößerten Durchmesser angeordnet, wobei dieser Bereich einen Resonanzkörper bildet, um die von der Membran erzeugten Schallwellen zu verstärken.

Ein bevorzugtes Ausführungsbeispiel wird anhand der Figuren näher erläutert. Es zeigt:
- Fig. 1: einen Ausschnitt aus einem Ansaugrohr mit der erfindungsgemäßen Vorrichtung in einer schematischen Darstellung und
- Fig. 2: die erfindungsgemäße Vorrichtung in Kombination mit einer aktiven Geräuschunterdrückungseinheit.

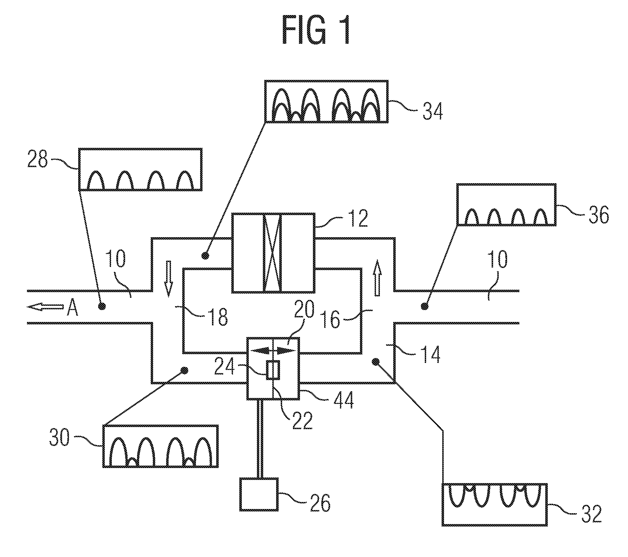

Figur 1 zeigt ein Ansaugrohr 10, durch das Luft zu der Brennkraftmaschine angesaugt wird. Die Luft strömt hierbei in Richtung der mit A gekennzeichneten Pfeile. In dem ersten Rohr 10 angeordnet ist ein Luftfilter 12, der die Luft vor einem Eintritt in die Zylinder der Brennkraftmaschine filtert. Parallel zu dem ersten Rohr 10 angeordnet ist ein zweites Rohr 14, das in den Bereichen 16 und 18 in das erste Rohr 10 mündet.

In dem zweiten Rohr 14 ist eine Resonanzkammer 20 mit einer schwingungsfähigen Flachmembran 22 vorgesehen. Die Flachmembran wird durch die schematisch dargestellten Erregermittel 24 in Schwingungen versetzt. Die Erregermittel sind mit einer Signalgebereinrichtung 26 verbunden, die elektrische Impulse erzeugt, die zu einer Auslenkung der Membran 22 führt.

Entgegen der Strömungsrichtung A der Luft breiten sich vom Motor kommende Pulsationswellen in dem ersten Rohr 10 aus. Schaubild 28 zeigt schematisch eine durch das erste Rohr 10 laufende Pulsationswelle. In dem zweiten Rohr wird eine Schallwelle erzeugt, die sich in Richtung auf die Mündung 18 beispielsweise mit einer Schallwelle 30 ausbreitet. In die entgegensetzte Richtung, also in Richtung auf die Mündung 14, breitet sich die Schallwelle um 180° phasenversetzt aus (vgl. Diagramm 32). Der Phasenversatz rührt daher, dass eine Auslenkung der Membran 22 in einer Richtung zur Kompression der Luft führt, während in der entgegengesetzten Richtung ein Ansaugen von Luft stattfindet. Somit sind die von der Rückseite der Membran abgestrahlten Schallwellen um 180° phasenversetzt gegenüber den von der Vorderseite abgestrahlten Schallwellen. Werden die so versetzten Schallwellen wieder zusammengeführt, so erfolgt bei einer entsprechenden Dimensionierung des zweiten Rohrs und der Lauflänge zwischen Mündung 14 und 18 eine Auslöschung. Die mit 30 gekennzeichneten Schallwellen treten an der Mündung 18 in das Rohr 10 ein und erzeugen eine Schallwelle 34. Dies führt dazu, dass zwischen Luftfilter und Brennkraftmaschine die Pulsationswelle eine größere Amplitude besitzt und somit eine größere Aufladung erfolgen kann. Zur Verstärkung der Schallwellen der Membran 22 ist diese in einem Resonanzhohlraum 44 angeordnet.

In der Mündung 14 tritt die phasenversetzte Schallwelle ein und löscht den an der Mündung 18 hinzugefügten Anteil der Schallwelle aus. Dies führt dazu, dass keine zusätzlichen Geräusche nach außen dringen, obwohl mit einer Pulsationswelle mit erhöhter Amplitude gearbeitet wird.

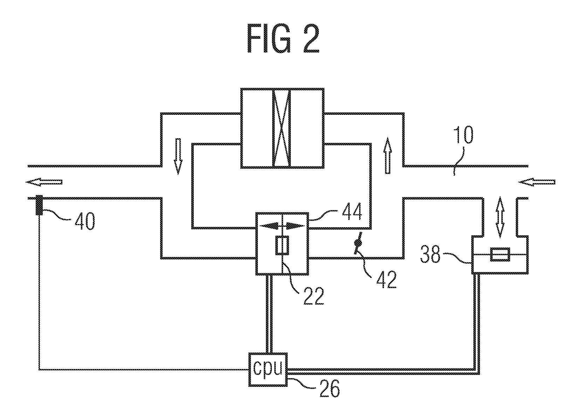

Figur 2 zeigt die erfindungsgemäße Vorrichtung, die zusätzlich mit einem Lautsprecher 38 versehen ist. Der Lautsprecher 38 kann dazu dienen, der von der Brennkraftmaschine stammenden Pulsationswelle weitere Geräusche hinzuzufügen oder diese zu entfernen, die als das Hinzufügen von Sound bezeichnet wird. Auch kann der Lautsprecher für eine aktive Geräuschunterdrückungseinheit vorgesehen sein, die durch das Einspeisen von phasenversetzten Schallwellen, die durch das Rohr 10 laufenden Schallwellen dämpft und unterdrückt. Der in Figur 2 dargestellte Lautsprecher 38 kann bevorzugt durch die Signalgebereinrichtung 26 angesteuert werden, die auch die Membran 22 ansteuert.

In der in Figur 2 dargestellten Ausgestaltung ist zusätzlich in dem Rohr 10 stromaufwärts der beiden Lautsprecher 22 und 38 ein Mikrofon 40 vorgesehen, das die von der Brennkraftmaschine stammenden Pulsationswellen misst und an die Signalgebereinrichtung weiterleitet, um die Lautsprecher entsprechend anzusteuern. In dem zweiten Rohr ist zusätzlich eine verstellbare Klappe 42 vorgesehen, mit der die in Richtung der Mündung 16 laufende Welle teilweise oder vollständig unterdrückt werden kann

## Patentansprüche

1. Vorrichtung zur Aufladung einer Brennkraftmaschine, mit
- einem ersten Rohr (10) zur Versorgung der Brennkraftmaschine mit Luft,
- einem zweiten Rohr (14), das an seinen beiden Enden in unterschiedlichen Bereichen (16, 18) in das erste Rohr mündet, und
- einer Lautsprechervorrichtung, die eine Signalgebereinrichtung (26) und eine schwingungsfähige Membran (22) besitzt, welche mit Mitteln (24) versehen ist, um auf Signale der Signalgebervorrichtung ansprechend Schwingungen der Membran anzuregen,
- wobei die Membran in dem zweiten Rohr im wesentlichen senkrecht zur Rohrlängsrichtung angeordnet ist und von der Membran erzeugte Schallwellen sich entlang dem zweiten Rohr in beiden Richtungen zu den Enden hin ausbreiten und in das erste Rohr eintreten.

2. Vorrichtung nach Anspruch 1, **dadurch gekennzeichnet, dass** die Signalgebereinrichtung (26) eine Schwingungsfrequenz der Membran abhängig von der Drehzahl und der Geometrie der Brennkraftmaschine erzeugt.

3. Vorrichtung nach Anspruch 1 oder 2, **dadurch gekennzeichnet, dass** zusätzlich ein Mikrofon (40) stromabwärts von der Lautsprechervorrichtung vorgesehen ist, das Pulsationswellen fühlt und seine Messwerte an die Signalgebereinrichtung weiterleitet.

4. Vorrichtung nach einem der Ansprüche 1 bis 3, **dadurch gekennzeichnet, dass** in dem ersten Rohr ein Luftfilter (12) oder eine Rohrerweiterung zwischen der ersten und zweiten Mündung des zweiten Rohrs angeordnet ist.

5. Vorrichtung nach einem der Ansprüche 1 bis 4, **dadurch gekennzeichnet, dass** die Membran zwischen erster und zweiter Mündung derart angeordnet ist, dass eine durch das erste Rohr laufende Pulsationswelle an der ersten Mündung eine erste von der Membran erzeugte Schallwelle hinzugefügt und an der zweiten Mündung der hinzugefügte Anteil im wesentlichen durch die um 180° phasenversetzte Schallwelle der Membran wieder ausgelöscht wird.

6. Vorrichtung nach einem der Ansprüche 1 bis 5, **dadurch gekennzeichnet, dass** zusätzlich stromaufwärts ein zweiter Lautsprecher (38) vorgesehen ist, insbesondere eine an sich bekannte aktive Geräuschunterdrückungseinheit oder eine Einrichtung zum Hinzufügen von Sound.

7. Vorrichtung nach Anspruch 6, **dadurch gekennzeichnet, dass** der zweite Lautsprecher (38) ebenfalls von der Signalgebereinrichtung (26) angesteuert wird.

8. Vorrichtung nach Anspruch 6 oder 7, **dadurch gekennzeichnet, dass** zusätzlich zwischen Membran und zweitem Lautsprecher eine verstellbare Klappe (48) vorgesehen ist.

9. Vorrichtung nach einem der Ansprüche 1 bis 8, **dadurch gekennzeichnet, dass** als Membran eine Flachmembran vorgesehen ist.

10. Vorrichtung nach Anspruch 9, **dadurch gekennzeichnet, dass** die Flachmembran im wesentlichen luftundurchlässig ist.

11. Vorrichtung nach Anspruch 10, **dadurch gekennzeichnet, dass** die Flachmembran mit ihrem Rand als dichtend an der Innenwand des zweiten Rohres befestigt ist.

12. Vorrichtung nach einem der Ansprüche 1 bis 11, **dadurch gekennzeichnet, dass** die Flachmembran in einem Resonanzhohlraum in dem zweiten Rohr angeordnet ist.
